# EUROPEAN PATENT SPECIFICATION

(11) **EP 3 951 342 B1**
(45) Date of publication and mention of the grant of the patent: **14.01.2026**
(21) Application number: 20189532.3
(22) Date of filing: 05.08.2020
(51) Int. Cl.: G01L 1/14, G01L 1/22, G01L 1/26

(54) **FORCE SENSOR PACKAGE AND FABRICATION METHOD**
KRAFTSENSORGEHÄUSE UND HERSTELLUNGSVERFAHREN
EMBALLAGE DE CAPTEUR DE FORCE ET PROCÉDÉ DE FABRICATION

(43) Date of publication of application: 09.02.2022
(73) Proprietor: TE Connectivity Solutions GmbH, 8200 Schaffhausen (CH)
(72) Inventor: LE NEAL, Jean-Francois, Neuenburg (CH); JENNI, Kaspar, Neuenburg (CH); PFEIFFER, Martin, Neuenburg (CH); ORELLANA, Sebastian, Neuenburg (CH)
(74) Representative: Grünecker Patent- und Rechtsanwälte PartG mbB

(56) References cited:
- EP-A1- 3 627 124
- EP-A2- 0 426 171
- US-A1- 2005 166 682
- US-A1- 2007 245 836
- US-A1- 2011 000 318

## Description

The invention relates to a force sensor package and a fabrication method for manufacturing a force sensor package.

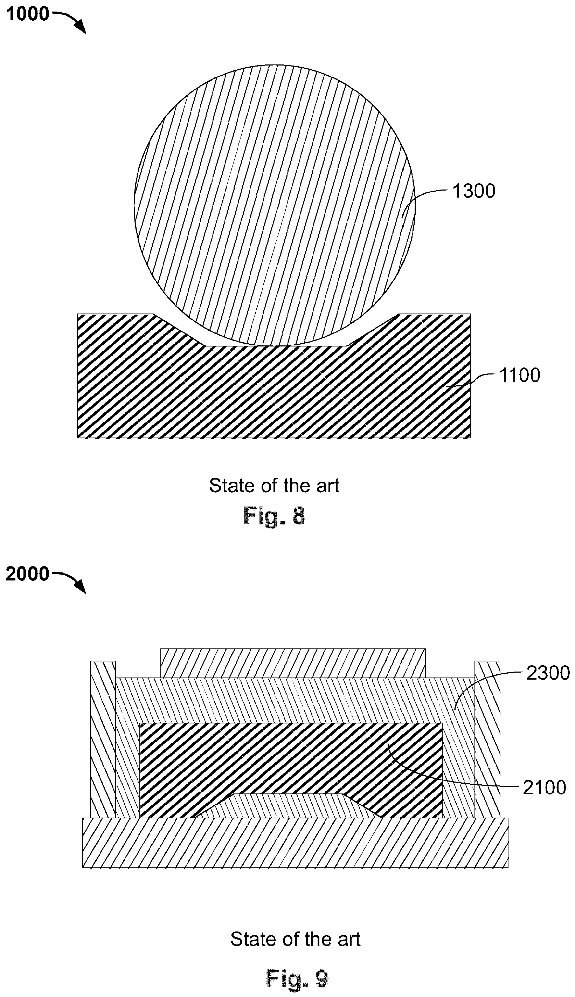

A force sensor measures the tension and compression forces, which act on the sensor. Figs. 8 and 9 shows force sensor packages according to the state of the art.

In more detail, Fig. 8 shows a force sensor package 1000 comprising a substrate 1100 with a force sensing unit (not shown) and a transducer element 1300. The transducer element 1300, which is according to Fig. 8 a ball, transmits an externally applied force (not shown) to the force sensor unit. The application of force causes that a parameter of the force sensor unit changes. Thereby, the amount of force applied to the force sensor package can be determined. Alternatively, Fig. 9 shows a force sensor package 2000 comprising a substrate 2100 with a force sensing unit and a transducer element 2300. The transducer element 2300, which is according to Fig. 9 a gel filled into the force sensor package, transmits an externally applied force (not shown) to the force sensor unit. The application of force causes that a parameter of the force sensor unit changes. Thereby, the amount of force applied to the force sensor package can be determined.

According to solutions shown in Figs. 8 and 9, the transducer element 1300, 2300 enables transducing the force to a well-defined region on the force sensing unit. For example, in the case of a ball, as shown in Fig. 8, the transduced force is applied at a central part of the force senor unit. Alternatively, in the case of a gel, as shown in Fig. 9, the transduced force is applied uniform to the force senor unit.

Known force sensors, however, suffer from the fact that various demanding requirements must be met. For example, precise measurements of the force require precise alignment of the transducer element with respect to the force sensor unit. Furthermore, for versatile application of the sensor, such as in a vehicle, the connection between the sensor and the transducer element needs to be robust, e.g. robust in view of environmental influences. Furthermore, sensor endurance requires that the connection between the transduction element and the sensor unit is a wear-free mechanical contact. Furthermore, for sensor unit protection, a force sensor assembly requires additionally an overload protection that can limit the movement of the transduction element in case of an overload force.

US 2005/166682 A1 describes a pressure sensor, which includes a casing; a sensor chip with a gauge resistor; a boss disposed on the gauge resistor; a metallic diaphragm capable of distorting in accordance with a pressure; and a load transmission member disposed between the metallic diaphragm and the boss.

EP 3627124 A1 describes a photosensitive force sensor. An example photosensitive force sensor comprises a force sensing device configured to be disposed on a surface of a substrate; a housing configured to be disposed on at least a portion of the surface of the substrate; and an actuator configured to be disposed partially within the housing and partially within the aperture defined by the housing. The housing is configured to enclose the force sensing device. The aperture is configured to provide a coupling interface. The actuator is in mechanical contact with the force sensing device. The actuator is a rigid body that is configured to provide a light path from a light source external to/outside of the housing to the force sensing device.

US 2007/245836 A1 describes a three-dimensional force input control device for sensing vector forces and converting them into electronic signals for processing in a electronic signal processing system with all components within die fabricated from the single semiconductor substrate.

The object of the invention is to provide a solution for a force sensor package that overcomes the above disadvantages when assembling a transducer element and a force sensor unit. In more detail, an object of the present invention is a force sensor that enables precise measurements. A further object is a force sensor that can be realized at low cost. A further object is that a small size force sensor can be realized. A further object is that the force sensor can exploit existing technologies for sensing the force. A further object is that the force sensor is wear-free.

For example, the object of the present invention are sensors that require high performance or unique packaging, including electro-mechanical flight control, test and measurement and ultra-low cost load cells for medium to high volumes.

This object is solved by the independent claims 1 and 11.

Advantageous embodiments are solved by the dependent claims.

According to a first embodiment, a force sensor package for measuring an externally applied force comprises as a base material a substrate. The force sensor package, which may be also referred to as a force sensor assembly, is an element that can be mounted to a housing, the housing may be made of a plastic material. The substrate comprises a force sensor unit. For example, the force sensor is formed on a top or bottom surface of the substrate and/or the force sensor is formed within the substrate.

The force sensor unit produces an electrical signal depending on the externally applied force. In more detail, an electrical parameter of the force sensor unit changes when the substrate is deformed.

For example, the force sensor unit may comprise a sensor diaphragm, wherein an electrical resistivity of the sensor diaphragm changes when the substrate is deformed. In more detail, the internal diaphragm has at least one piezo-resistive element. The at least one resistive element exhibits a varying resistance responsive to deflection and/or stress of the diaphragm. When a force is exerted on the membrane of the force sensor unit, an electrical signal through piezo-resistive elements formed in the upper surface of the diaphragm of the force sensor unit varies responsive to variations in the piezo-resistive elements.

According to a further example, a force sensing capacitor can form the force sensor unit. A force sensing capacitor comprises a material or assembly whose capacitance changes when a force, pressure or mechanical stress is applied. They are also known as "force-sensitive capacitors". In particular, a capacitance between a sensor diaphragm and an armature changes when the substrate is deformed. Consequently, the applied force can be transformed in an electrical signal. According to a further example, the force sensor comprises a piezo-ceramic element, the application of force produces a charge distribution that is proportional to the force.

The force sensor package according to the present invention further comprises an actuator for transmitting mechanically the externally applied force to the substrate. An actuator enables that at a predefined area, ideally at a point like contact region, force is transferred to the force sensor unit. The force is transferred directly to the force sensor unit or the force is transferred via the substrate to force senor unit. Such an actuator allows that the measurement accuracy is improved.

According to the present invention the actuator is permanently bonded to a top surface of the substrate for deforming the substrate when the external force is applied.

Bonding is a packaging technology, for example for the fabrication of microelectromechanical systems (MEMS), nanoelectromechanical systems (NEMS), microelectronics and optoelectronics, ensuring a mechanically stable connection between actuator and substrate, and allowing for hermetically sealed encapsulation of the sensing elements.

In more detail, bonding enables that the encapsulated area containing the sensing elements is protected from environmental influences such as temperature, moisture, corrosive and oxidizing species. In particular, the connection between the substrate and the actuator is protected against environmental influences.

Advantageously, a plurality force sensor packages are fabricated by using wafer bonding. Wafer bonding is the packaging technology on wafer-level. The wafers' diameter range is from 100 mm to 300 mm (4 inch to 12 inch). Such a configuration allows an economic fabrication of force sensor packages. Alternatively, a bonding process at die level can produce a force sensor package individually.

The substrate comprises at least one bonding zone, and each bonding zone being defined on the top surface of the substrate. In more detail, the at least one bonding zone is defined by a process such as a microfabrication processes, for example optical lithography. The bonding zone than is prepared to enable the bonding between the actuator and the substrate.

In particular, depending on the bonding process, the bonding zone requires specific environmental conditions, for example, the bonding zone may formed from the substrate or may be formed by an additional intermediate layer on the substrate. Additionally or alternatively, a certain flatness, smoothness, and/or cleanliness of the surface of the bonding zone may be required. Consequently, the surface of the bonding zone is prepared before bonding the actuator to the substrate. Such a bonding zone enables precisely defining the area for transducing the externally applied force from the actuator to the force sensor unit comprised in the substrate.

The actuator and the top surface of the substrate are connected at an interconnection zone, the area of the interconnecting zone being a larger area than the area of the bonding zone. In more detail, the interconnection zone is defined when the actuator is placed on the substrate. For example, the substrate is a first wafer. A bonding zone is defined on a top surface of the first wafer. A second wafer, i.e. the wafer comprising the actuator, is positioned on the top surface of first wafer thereby defining the interconnection zone between the actuator and the substrate. Such an interconnection zone being larger than the bonding zone enables to compensate for alignment errors, e.g. lateral displacement errors of the second wafer with respect to the first wafer, when the second wafer is position on the first wafer.

The actuator comprises glass or silicon. Even more advantageously, the glass comprises sodium-containing borosilicate glass. Such materials enable at least one process for permanently bonding the actuator to the substrate.

Advantageously, the substrate and the actuator are bonded by anodic boding, direct bonding, or eutectic bonding.

Anodic bonding is a wafer bonding process to seal glass to either silicon or metal preferably without introducing an intermediate layer. In particular, anodic bonding enables to seal glass wafers, i.e. the actuator, to silicon wafers. i.e. the substrate comprising the force sensor unit. This bonding technique, also known as field assisted bonding or electrostatic sealing, enables connecting silicon/glass and metal/glass through electric fields. In particular, the bonding zone is a clean and even wafer surface. Such a bonding process enables an atomic contact between the bonding substrates through a sufficiently powerful electrostatic field. Preferably, borosilicate glass containing a high concentration of alkali ions is used as actuator.

Anodic bonding enables hermetic encapsulation of the sensor package. The encapsulation protects from environmental influences, e.g. humidity or contamination.

Direct bonding, or fusion bonding, describes a wafer bonding process without any additional intermediate layers. The bonding process is based on chemical bonds between two surfaces of any material possible meeting bonding requirements. In particular, the bonding zone is a sufficiently clean, flat and smooth wafer surface.

Direct bonding enables bonding of nearly all materials. Preferably, silicon, which is the most established material, is used.

Eutectic bonding, also referred to as eutectic soldering, describes a bonding technique with an intermediate metal layer that can produce a eutectic system. Those eutectic metals are alloys that transform directly from solid to liquid state, or vice versa from liquid to solid state, at a specific composition and temperature without passing a two-phase equilibrium, i.e. liquid and solid state. Such a bonding enables that the eutectic temperature can be much lower than the melting temperature of the materials of the substrate and the actuator.

Advantageously, the force sensor package according to the first embodiment further comprises a support element connected to a bottom surface of the substrate, the bottom surface opposing the top surface. For example, the support element being a constraint wafer bonded to the bottom surface of the substrate. Such a configuration enables a decoupling of the components. In more detail, the components used for measuring the applied force, namely the force sensor unit and the actuator connected to the top surface of the substrate, are decoupled from a supporting structure, e.g. a housing, connected to the support element.

Advantageously, the support element comprises an alignment portion. For example, the support element has a notch, a recess, a through passage or a hook. Such an alignment portion enables to align the force sensor package in a supporting structure, e.g. the housing, which may provide adapters for being connectable to an external appliance.

Advantageously, the force sensor package comprises additional guiding elements permanently bonded to the top surface of the substrate for guiding the actuator. Such a configuration allows to guide the movement of the actuator in a direction normal to the surface of the substrate and only the force normal to the surface is transmitted to the force sensor unit.

Advantageously, the force sensor element comprises an over travel stop element permanently bonded to the top surface of the substrate and/or an over travel stop element formed on an over travel stop surface of the actuator, the over travel stop surface facing the top surface of the substrate. Such configuration allows a force sensor package with a preinstalled overload protection.

The present invention further relates to a method for fabricating a force sensor package as defined in claim 11.

Such a method enables that the first substrate to be bonded may be provided with the force sensor unit, i.e. a first substrate comprising the force sensor unit, or alternatively forming the force sensor unit in the first substrate after the first substrate have been permanently bonded to the actuator. Advantageously, the actuator is provided by a second substrate. Such a configuration enables that after precisely aligning the first substrate and the second substrate the actuator is bonded to the first substrate. Such a configuration ensures that the force is transmitted at a precise location.

Advantageously, the method for fabricating the force sensor package further comprises the step of
defining an interconnection zone on a surface of the actuator to be bonded on the substrate and forming a recess in a recess zone, the recess zone abutting the interconnection zone.

Such a method enables to form an over travel stop element together with the substrate or the actuator element.

Advantageously, the method for fabricating the force sensor package further comprises the step of
dicing, etching or snapping a guiding passage in the actuator bonded on the substrate.

Such a method enables to bonding the guiding element together with the actuator element to the substrate in one process step.

Advantageously, the method for fabricating the force sensor package comprises the steps of
providing a first wafer defining a plurality of measurement zones;
bonding a second wafer to the first wafer;
forming a plurality of actuators in the second wafer.
forming a force sensor unit in each of the plurality of measurement zones, wherein an electrical parameter of the force sensor unit changes when the substrate is deformed.

Such a method enables to fabricate a plurality of force sensor packages. In particular, the actuators can be formed by dicing the second wafer.

The invention will now be described in greater detail and in an exemplary manner using advantageous embodiments and with reference to the drawings. The described embodiments are only possible configurations in which, however, the individual features as described above can be provided independently of one another or can be omitted.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. The described embodiments are merely possible configurations and it must be borne in mind that the individual features as described above can be provided independently of one another or can be omitted altogether while implementing this invention. Further features and advantages will become apparent from the following more particular description of the various embodiments of the invention, as illustrated in the accompanying drawings, in which like references refer to like elements, and wherein:
FIG. 1 is a schematic side view of a force sensor package according to a first embodiment;
FIG. 2 is a sectional view of a force sensor package according to a first embodiment according to one aspect;
FIG. 3 is a schematic side view of a force sensor package according to a second embodiment outside the scope of the claims;
FIG. 4 is a sectional view of Fig. 3;
FIG. 5 is a schematic side view of a force sensor package according to a third embodiment outside the scope of the claims;
FIG. 6 is a schematic side view of a force sensor package according to a fourth embodiment outside the scope of the claims;
FIG. 7 is a schematic side view of a force sensor package according to a fifth embodiment;
FIG. 8 is a schematic side view of a force sensor package according to the state of the art; and
FIG. 9 is a schematic side view of a further force sensor package according to the state of the art; .

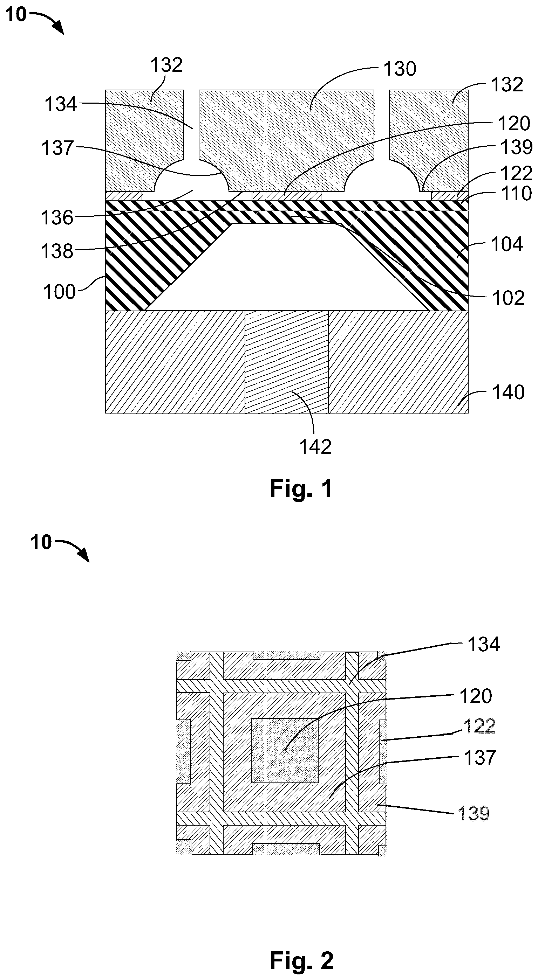

The present invention will now be explained in more detail with reference to the Figures. Referring to Fig. 1, a schematic side view of a force sensor package 10 according to a first embodiment.

The force sensor package 10 comprises a substrate 100, a force sensor unit 110, a bonding zone 120, an actuator element 130, and a support element 140.

The substrate 100 comprises a top surface and an opposing bottom surface. According to the first embodiment, a recess is formed in the bottom surface so that a deformation region 102 is formed in the substrate 100. Abutting to the deformation region 102 the substrate 100 comprises is a support region 104 for mounting the substrate 100 to the support element 140. Such a deformation region 102 enables that the substrate is deformed when an external force is applied. For the purpose of presentation only, the force sensor unit 110 is a diaphragm covering the top surface of the substrate 100. According to the present invention the force sensor unit 110 may be formed covering only a part of the top surface, for example partly covering the top surface of the deformation region 102. Alternatively, the force sensor unit may be formed on the bottom surface of the substrate, advantageously at the bottom surface of the deformation region 102. Alternatively, the force sensor unit may be formed within the substrate. Each of these configurations enable that an electrical parameter of the force sensor unit 110 changes when the substrate 100 is deformed. In particular, the deformation region 102 deforms.

Further, the sensor package 10 comprises an actuator element 130. The actuator element 130 is connected within an interconnection zone 138 to the substrate 100. In more detail, a surface of the actuator element 130 facing the substrate 100 comprises the interconnection zone 138. Such an actuator element 130 connected to the substrate enables to transfer an externally applied force to the substrate 100. Thus, the substrate 100 comprising the force sensor unit 110 is deformed in response to an externally applied force that is transferred by the actuator element 130.

Further, the sensor package 10 comprises a bonding zone 120. The bonding zone 120 is arranged between the substrate 100 and the actuator element 130. Such a bonding zone enables a permanent wear-free bonding between the actuator element 130 and the substrate 100.

The bonding zone 120 is defined by a structuring process on the top surface of the substrate 100. Such an arrangement allows precisely defining the point of contact between the actuator 130 and the substrate 100. Thereby, the measurement accuracy of the force sensor unit 110, which is comprised in or on the substrate 100, is increased.

Further, the area of the interconnection zone 138 is larger than the area of the bonding zone 120. In more detail, the bonding zone 120 is facing the interconnection zone 138. In a manufacturing process, the actuator element 130 is contacted with the interconnection zone 138 to the substrate 100. In more detail, the actuator element 130 is placed so as to cover the bonding zone 120. A configuration with an interconnection zone 138 being larger than the bonding zone 120 allows very fine tolerances in the alignment between the actuator element 130 and the substrate 100 and at the same time precisely defining the transfer region of the externally applied force.

Further, the first sensor package 10 comprises guiding elements 132 connected to the top surface of the substrate 100. The guiding elements 132 and the actuator element 130 are separated by a guiding passage 134. The guiding passage 134 are arranged parallel to the direction of external force, for example normal to the top surface of the substrate. Such guiding elements allowed to guide the actuator thereby increasing the measurement accuracy.

Advantageously, the guiding elements 132 are connected to the substrate 100. The connection between the guiding element and the substrate is similar to the connection between the actuator element and the substrate. For a detailed description of the connection is referred to the above. In particular, the substrate 100 comprises a bonding zone 122. The guiding element 132 further comprises an interconnection zone 139 that is larger than the bonding zone 122. Such a configuration enables a simple fabrication.

Further, the surface of the actuator element 130 opposing the substrate 100, i.e. the surface of the actuator element 130 comprising the interconnection zone 138, and the surface of the guiding element 132 comprising the interconnection zone 139, comprises a recess zone 137, the recess zone 137 neighbors the interconnection zone 138, 139. For example, the recess zone 137 is realized by the forming an interconnection void 136 in the actuator. Such a recess zone allow a simple fabrication. In particular, the guiding elements 132 and the actuator element 130 are formed from one single wafer. In more detail, a recess is formed in the recess zone of the wafer. The wafer is then bonded to the substrate 100. Then, guiding passages 134 are formed in the wafer, for example by etching or dicing. The recess zones thereby enables protecting the substrate 100. In particular, a cross section of the recess zone is larger than a cross section of the guiding passage.

Further, the sensor package comprises a support element 140. The support element 140 is connected on a bottom surface of the substrate. The bottom surface opposing the top surface. Such a configuration enables a decoupling between the sensing elements, the sensing elements comprising the substrate 100 and the actuator element 130, and a housing to be mounted to the support element 140.

The support element 140 further comprises an alignment portion 142. Advantageously, as shown in Fig. 1, the alignment portion is a through hole in the support element 140. Such an alignment portion allows precisely aligning the sensor package with respect to a housing to be connected to the support element 140. Advantageously, the alignment portion 142 also allows for pressure equilibrium on both sides of the force sensing elements.

Further, Fig. 2 is a sectional view of a force sensor package according to a first embodiment according to one aspect. Different to the arrangement of Fig. 1 is that the interconnection zone and the bonding zone are equal in area. In more detail, Fig. 2 shows bonding zones 120, 122, recess zones 137, 139, and guiding passages 134, wherein the guiding passages 134 are arranged between abutting actuator elements and guiding elements. As best shown in Fig. 2, the arrangement is symmetric.

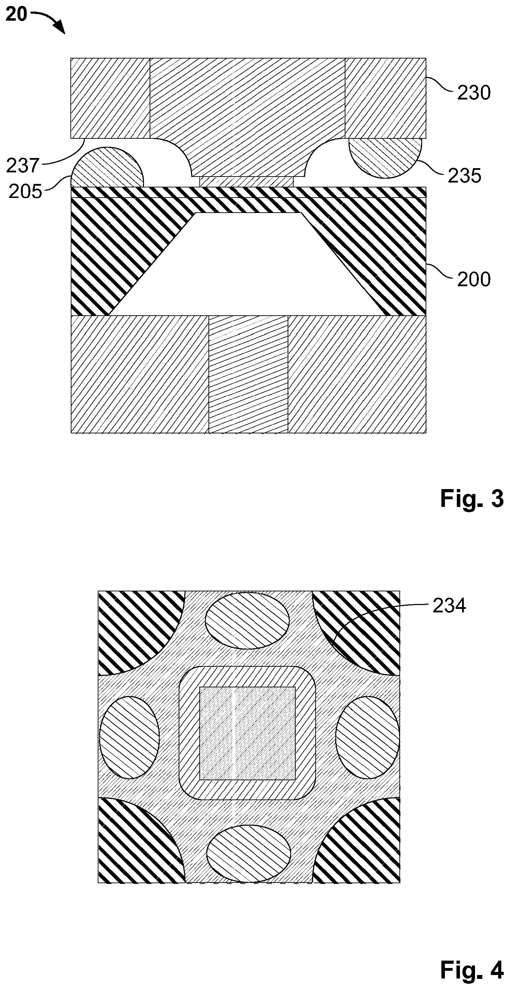

Further, Fig. 3 is a schematic side view of a force sensor package 20 according to a second embodiment outside the scope of the claims.

The force sensor package 20 comprises a substrate 200, a force sensor unit, a bonding zone, an actuator element 230, and a support element. For the description of the force sensor unit, the bonding zone, and the support element is referred to the above.

In addition to the first embodiment, the force sensor package 20 comprises over travel stop elements 205 and 235. In more detail, over travel stop element 205 is permanently bonded to the top surface of the substrate 200. Over travel stop element 235 is formed on an over travel stop surface 237 of the actuator 230, the over travel stop surface 237 facing the top surface of the substrate. Such a configuration allows that the sensor package is protected from an over load.

Further, Fig. 4 is a sectional view of a force sensor package according to a second embodiment outside the scope of the claims.

Different to the arrangement of Fig. 2 is that the interconnection zone and the bonding zone are equal in area. Additionally, Fig. 4 shows a separation line 234 of the dice forming the actuator element. In more detail, this embodiment shows an embodiment without guiding element.

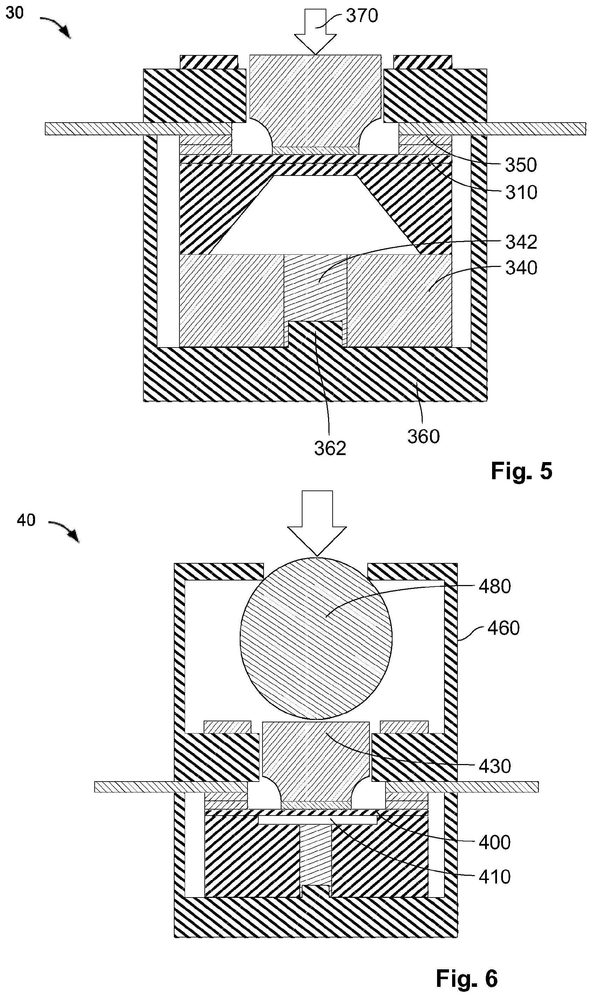

Further, Fig. 5 is a schematic side view of a force sensor package 30 according to a third embodiment outside the scope of the claims.

The force sensor package 30 is adapted to measure the externally applied force 370. The force sensor package 30 comprises a substrate, a force sensor unit 310, bonding zones, an actuator element, guiding elements, a support element 340, connecting terminals 350, and a housing 360. For the description of the substrate, the force sensor unit, the bonding zone, the actuator element, the guiding element is referred to the above.

In addition to the first embodiment, the force sensor package 30 comprises electrically connecting terminals 350 for connecting the force sensor unit 310.

Further, the third embodiment shows a housing connected to the support element 340, wherein the housing comprises a positioning pin 362 for engaging with the alignment portion 342. Advantageously, the housing is made of plastic or metal. Advantageously, the housing comprises means for guiding the connecting terminals 350.

Further, Fig. 6 is a schematic side view of a force sensor package 40 according to a fourth embodiment outside the scope of the claims.

The force sensor package 40 comprises a substrate 400, a force sensor unit 410, bonding zones, an actuator element 430, guiding elements, a support element, connecting terminals, a housing 460, and a transducer element 480. For the description of the substrate, the force sensor unit, the bonding zones, the actuator element, the guiding elements, the support element, the connecting terminals, and the housing 460 is referred to the above.

The fourth embodiment shows an example that the force sensor unit 410 can be arranged on a bottom surface of the substrate 400. The bottom surface of the substrate opposing the top surface. To the top surface the actuator element 430 is connected.

In addition to the third embodiment, the housing 460 holds a transducer element 480, in particular a ball. Such a configuration allows provide a sensor package, which comprises the actuator 430 permanently bonded to the substrate 400, with a transducer element 480.

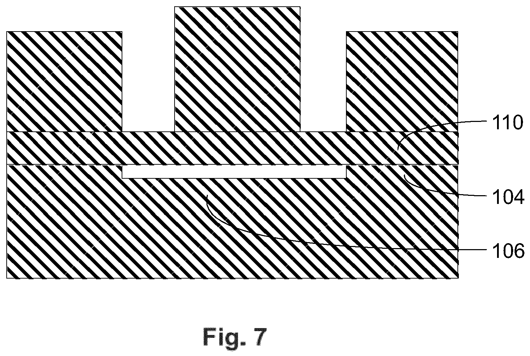

Further, Fig. 7 is a schematic side view of a force sensor package according to a fifth embodiment. The force sensor package comprises a substrate, a force sensor unit 110, a bonding zone, an actuator element, and a support element. For the description of the force sensor unit 110, the bonding zone, and the actuator element is referred to the above description of the first to third element.

Similarly to the first to fourth embodiment, the substrate comprises a support region 104. Alternatively to the first to fourth embodiment, a base region 106 of the substrate is recessed. The recessed part of the base region 106 is abutting to the force sensor unit 110. In other words, a void is formed between the support element and the force sensor unit 110. Such a configuration allows that the force sensor unit 110 can be deformed. In more detail, the void, which may be filled with ambient air, enables that the force sensor unit 110 is deformed when an external force is applied.

Even if not described with reference to the Figures, a force sensor package can comprise guiding elements and over travel stop elements.

### REFERENCE NUMERALS

| **Reference Numeral** | **Description** |
|---|---|
| 10, 20, 30, 40 | force sensor package |
| 100, 200, 400 | substrate |
| 102 | deformation region |
| 104 | support region |
| 106 | base region |
| 110, 310 | force sensor unit |
| 120, 122 | bonding zone |
| 130, 230, 430 | actuator element |
| 132 | guiding element |
| 134 | guiding passage |
| 136 | interconnection void |
| 137, 237 | recess zone |
| 138, 139 | interconnection zone |
| 140, 240, 340 | support element |
| 142, 342 | alignment portion |
| 205, 235 | over travel stop element |
| 234 | separation line |
| 350 | connecting terminals |
| 360, 460 | housing |
| 362 | positioning pin |
| 370 | force |
| 1000, 2000 | force sensor package |
| 1100, 2100 | substrate |
| 1300, 2300 | transducer element |

## Claims

1. Force sensor package (10) for measuring an externally applied force, the force sensor package comprising:
a substrate (100) comprising a force sensor unit (110),
wherein an electrical parameter of the force sensor unit (110) changes when the substrate is deformed;
wherein the substrate (100) comprises a bonding zone (120) defined on a top surface of the substrate (100), wherein the bonding zone (120) is defined by a structuring process;
an actuator (130) for transmitting mechanically the externally applied force to the substrate (100);
wherein the actuator (130) is permanently bonded to the bonding zone defined on the top surface of the substrate (100) for deforming the substrate when the external force is applied,
the actuator (130) and the top surface of the substrate are connected at an interconnection zone (138), the area of the interconnection zone (138) being larger than the area of the bonding zone (120), wherein the interconnection zone (138) is defined when the actuator (130) is placed on the substrate (100), and
wherein the actuator (130) comprises glass or silicon.

2. Force sensor package (10) according to claim 1, wherein
the force sensor unit (110) has a sensor diaphragm, wherein an electrical resistivity of the sensor diaphragm changes when the substrate is deformed or wherein a capacitance between the sensor diaphragm and an armature changes when the substrate is deformed.

3. Force sensor package (10) according to claim 1 or 2, wherein
the force sensor unit (110) comprises silicon, optionally wherein the force sensor unit comprises single crystal silicon or polycrystalline silicon.

4. Force sensor package (10) according to any preceding claim, wherein
wherein the glass comprises sodium-containing borosilicate glass.

5. Force sensor package (10) according to any preceding claim, wherein
the substrate (100) and the actuator (130) are bonded by anodic boding, direct bonding, or eutectic bonding.

6. Force sensor package (10) according any preceding claim, further comprising
a support element (140) connected to a bottom surface of the substrate (100), the bottom surface opposing the top surface.

7. Force sensor package (10) according to claim 6, wherein
the support element (140) comprises an alignment portion (142).

8. Force sensor package (10) according to any preceding claim, further comprising
guiding elements (132) permanently bonded to the top surface of the substrate (100) for guiding the actuator (130).

9. Force sensor package (20) according to any preceding claim, further comprising
an over travel stop element (205) permanently bonded to the top surface of the substrate (200) and/or an over travel stop element (235) formed on an over travel stop surface of the actuator (230), the over travel stop surface facing the top surface of the substrate (20).

10. Force sensor package (10) according to any preceding claim, wherein
the substrate (100) comprises a plurality of bonding zones (120), each bonding zone (120) being defined on the top surface of the substrate (100).

11. Method for fabricating a force sensor package according to one of claims 1-10, comprising the steps of providing the substrate (100) for defining a measurement zone, bonding the actuator (120) for transmitting the externally applied force to the substrate; and forming a force sensor unit (110) in the measurement zone, wherein the electrical parameter of the force sensor unit (110) changes when the substrate is deformed.

12. Method for fabricating the force sensor package of claims 11, further comprising the step of defining the interconnection zone on a surface of the actuator (130) to be bonded on the substrate (100) and forming a recess in a recess zone, the recess zone abutting the interconnection zone.

13. Method for fabricating the force sensor package of claim 11 or claim 12, further comprising the step of
dicing a guiding passage in the actuator (130) bonded on the substrate (100).

14. Method for fabricating the force sensor package according to any of claims 11 to 13, comprises the steps of
providing a first wafer defining a plurality of measurement zones;
bonding a second wafer to the first wafer;
forming a plurality of actuators (130) in the second wafer; and
forming the force sensor unit (110) in each of the plurality of measurement zones, wherein the electrical parameter of the force sensor unit (110) changes when the substrate (100) is deformed.

## Patentansprüche

1. Kraftsensorgehäuse (10) zum Messen einer von außen aufgebrachten Maßnahme, wobei das Kraftsensorgehäuse Folgendes aufweist:
ein Substrat (100), das eine Kraftsensoreinheit (110) aufweist,
wobei sich ein elektrischer Parameter der Kraftsensoreinheit (110) ändert, wenn das Substrat verformt wird;
wobei das Substrat (100) eine Verbindungszone (120) aufweist, die auf einer oberen Oberfläche des Substrats (100) definiert ist, wobei die Verbindungszone (120) durch einen Strukturierungsprozess definiert ist;
einen Aktuator (130) zum mechanischen Übertragen der von außen aufgebrachten Kraft auf das Substrat (100); wobei der Aktuator (130) dauerhaft mit der auf der Oberseite des Substrats (100) definierten Verbindungszone verbunden ist, um das Substrat zu verformen, wenn die äußere Kraft aufgebracht wird,
das Aktuator (130) und die obere Oberfläche des Substrats an einer Verbindungszone (138) verbunden sind, wobei die Fläche der Verbindungszone (138) größer ist als die Fläche der Verbindungszone (120), wobei die Verbindungszone (138) definiert ist, wenn der Aktuator (130) auf dem Substrat (100) angeordnet ist, und
wobei der Aktuator (130) Glas oder Silizium aufweist.

2. Kraftsensorgehäuse (10) nach Anspruch 1, wobei
die Kraftsensoreinheit (110) eine Sensormembran aufweist, wobei sich ein elektrischer Widerstand der Sensormembran ändert, wenn das Substrat verformt wird, oder wobei sich eine Kapazität zwischen der Sensormembran und einem Anker ändert, wenn das Substrat verformt wird.

3. Kraftsensorgehäuse (10) nach Anspruch 1 oder 2, wobei
die Kraftsensoreinheit (110) Silizium aufweist, optional, wobei die Kraftsensoreinheit einkristallines Silizium oder polykristallines Silizium aufweist.

4. Kraftsensorgehäuse (10) nach einem der vorhergehenden Ansprüche, wobei wobei das Glas natriumhaltiges Borosilikatglas aufweist.

5. Kraftsensorgehäuse (10) nach einem der vorangehenden Ansprüche, wobei
das Substrat (100) und der Aktuator (130) durch anodisches Verbinden, direktes Verbinden oder eutektisches Verbinden verbunden sind.

6. Kraftsensorgehäuse (10) nach einem der vorangehenden Ansprüche, das ferner folgendes aufweist ein Unterstützungselement (140), das mit einer unteren Fläche des Substrats (100) verbunden ist, wobei die untere Fläche der oberen Fläche gegenüberliegt.

7. Kraftsensorgehäuse (10) nach Anspruch 6, wobei
das Unterstützungselement (140) einen Ausrichtungsabschnitt (142) aufweist.

8. Kraftsensorgehäuse (10) nach einem der vorhergehenden Ansprüche, das ferner aufweist Führungselemente (132), die dauerhaft mit der oberen Fläche des Substrats (100) verbunden sind, um den Aktuator (130) zu führen.

9. Kraftsensorgehäuse (20) nach einem der vorangehenden Ansprüche, das ferner folgendes aufweist
ein Überweg-Anschlagelement (205), das dauerhaft mit der Oberseite des Substrats (200) verbunden ist, und/oder ein Überweg-Anschlagelement (235), das auf einer Überweg-Anschlagfläche des Aktuators (230) ausgebildet ist, wobei die Überweg-Anschlagfläche der Oberseite des Substrats (20) zugewandt ist.

10. Kraftsensorgehäuse (10) nach einem der vorhergehenden Ansprüche, wobei
das Substrat (100) eine Vielzahl von Verbindungszonen (120) aufweist, wobei jede Verbindungszone (120) auf der oberen Oberfläche des Substrats (100) definiert ist.

11. Verfahren zur Herstellung eines Kraftsensorgehäuses nach einem der Ansprüche 1-10, das die folgenden Schritte aufweist
Bereitstellen des Substrats (100) zur Definition einer Maßnahme,
Verbinden des Aktuators (120) zum Übertragen der von außen aufgebrachten Kraft auf das Substrat; und
Ausbilden einer Kraftsensoreinheit (110) in der Messzone, wobei sich der elektrische Parameter der Kraftsensoreinheit (110) ändert, wenn das Substrat verformt wird.

12. Verfahren zur Herstellung des Kraftsensorgehäuses nach Anspruch 11, das ferner den folgenden Schritt aufweist
Definieren der Verbindungszone auf einer Oberfläche des Aktuators (130), der auf das Substrat (100) geklebt werden soll, und Ausbilden einer Ausnehmung in einer Vertiefungszone, wobei die Vertiefungszone an die Verbindungszone angrenzt.

13. Verfahren zur Herstellung des Kraftsensorgehäuses nach Anspruch 11 oder Anspruch 12, das weiterhin den Schritt aufweist
Einschneiden eines Führungskanals in den Aktuator (130), der auf dem Substrat (100) verbunden ist.

14. Verfahren zur Herstellung des Kraftsensorgehäuses nach einem der Ansprüche 11 bis 13, das die folgenden Schritte aufweist
Bereitstellen eines ersten Wafers, der eine Vielzahl von Messzonen definiert;
Verbinden eines zweiten Wafers mit dem ersten Wafer; Ausbilden einer Vielzahl von Aktuatoren (130) in dem zweiten Wafer; und
Ausbilden der Kraftsensoreinheit (110) in jeder der Vielzahl von Messzonen, wobei sich der elektrische Parameter der Kraftsensoreinheit (110) ändert, wenn das Substrat (100) verformt wird.

## Revendications

1. Boîtier de capteur de force (10) destiné à mesurer une force appliquée depuis l'extérieur, le boîtier de capteur de force comprenant :
un substrat (100) comportant une unité de capteur de force (110), dans lequel un paramètre électrique de l'unité de capteur de force (110) change quand le substrat est déformé ;
dans lequel le substrat (100) comprend une zone de liaison (120) définie sur une surface supérieure du substrat (100), dans lequel la zone de liaison (120) est définie par un processus de structuration ;
un actionneur (130) pour transmettre mécaniquement la force appliquée depuis l'extérieur au substrat (100) ;
dans lequel l'actionneur (130) est lié de manière permanente à la zone de liaison définie sur la surface supérieure du substrat (100) pour déformer le substrat quand une force externe est appliquée, l'actionneur (130) et la surface supérieure du substrat sont connectés au niveau d'une zone d'interconnexion (138), la région de la zone d'interconnexion (138) étant plus grande que la région de la zone de liaison (120), dans lequel la zone d'interconnexion (138) est définie quand l'actionneur (130) est placé sur le substrat (100), et
dans lequel l'actionneur (130) comprend du verre ou du silicium.

2. Boîtier de capteur de force (10) selon la revendication 1, dans lequel
l'unité de capteur de force (110) comporte un diaphragme de capteur, dans lequel la résistivité électrique du diaphragme de capteur change quand le substrat est déformé, ou dans lequel la capacité entre le diaphragme de capteur et une armature change quand le substrat est déformé.

3. Boîtier de capteur de force (10) selon la revendication 1 ou 2, dans lequel
l'unité de capteur de force (110) comprend du silicium, facultativement dans lequel l'unité de capteur de force comprend du silicium monocristallin ou du silicium polycristallin.

4. Boîtier de capteur de force (10) selon l'une quelconque des revendications précédentes, dans lequel le verre est un verre borosilicaté contenant du sodium.

5. Boîtier de capteur de force (10) selon l'une quelconque des revendications précédentes, dans lequel
le substrat (100) et l'actionneur (130) sont liés par liaison anodique, par liaison directe ou par liaison eutectique.

6. Boîtier de capteur de force (10) selon l'une quelconque des revendications précédentes, comprenant en outre
un élément de support (140) connecté à une surface inférieure du substrat (100), la surface inférieure étant opposée à la surface supérieure.

7. Boîtier de capteur de force (10) selon la revendication 6, dans lequel
l'élément de support (140) comprend une portion d'alignement (142).

8. Boîtier de capteur de force (10) selon l'une quelconque des revendications précédentes, comprenant en outre
des éléments de guidage (132) liés de manière permanente à la surface supérieure du substrat (100) pour guider l'actionneur (130).

9. Boîtier de capteur de force (20) selon l'une quelconque des revendications précédentes, comprenant en outre
un élément de butée de surcourse (205) lié de manière permanente à la surface supérieure du substrat (200) et/ou un élément de butée de surcourse (235) formé sur une surface de butée de surcourse de l'actionneur (230), la surface de butée de surcourse faisant face à la surface supérieure du substrat (20).

10. Boîtier de capteur de force (10) selon l'une quelconque des revendications précédentes, dans lequel
le substrat (100) comprend une pluralité de zones de liaison (120), chaque zone de liaison (120) étant définie sur la surface supérieure du substrat (100).

11. Procédé de fabrication d'un boîtier de capteur de force selon l'une des revendications 1 à 10, comprenant les étapes suivantes :
fourniture du substrat (100) pour définir une zone de mesure ;
liaison de l'actionneur (120) pour transmettre la force appliquée depuis l'extérieur au substrat ; et
formation d'une unité de capteur de force (110) dans la zone de mesure, dans lequel le paramètre électrique de l'unité de capteur de force (110) change quand le substrat est déformé.

12. Procédé de fabrication du boîtier de capteur de force selon la revendication 11, comprenant en outre l'étape de définition de la zone d'interconnexion sur une surface de l'actionneur (130) à lier sur le substrat (100) et de formation d'un renfoncement dans une zone de renfoncement, la zone de renfoncement venant à butée contre la zone d'interconnexion.

13. Procédé de fabrication du boîtier de capteur de force selon la revendication 11 ou 12, comprenant en outre l'étape de découpe d'un passage de guidage dans l'actionneur (130) lié sur le substrat (100).

14. Procédé de fabrication du boîtier de capteur de force selon l'une quelconque des revendications 11 à 13, comprenant les étapes suivantes :
fourniture d'un premier wafer définissant une pluralité de zones de mesure ;
liaison d'un deuxième wafer au premier wafer ;
formation d'une pluralité d'actionneurs (130) dans le deuxième wafer ; et
formation de l'unité de capteur de force (110) dans chaque zone de la pluralité de zones de mesure, dans lequel le paramètre électrique de l'unité de capteur de force (110) change quand le substrat (100) est déformé.
